(19) Europäisches Patentamt
European Patent Office
Office européen des brevets

(11) **EP 2 208 758 B1**

(12) **EUROPEAN PATENT SPECIFICATION**

(45) Date of publication and mention
of the grant of the patent:
**25.11.2015 Bulletin 2015/48**

(21) Application number: **08847504.1**

(22) Date of filing: **27.10.2008**

(51) Int Cl.:
*C08L 53/00* (2006.01)     *C08K 3/00* (2006.01)
*C08L 23/08* (2006.01)     *C08L 23/12* (2006.01)

(86) International application number:
**PCT/JP2008/069414**

(87) International publication number:
**WO 2009/060738 (14.05.2009 Gazette 2009/20)**

(54) **POLYPROPYLENE RESIN COMPOSITION FOR AUTOMOTIVE MATERIAL**

POLYPROPYLENHARZZUSAMMENSETZUNG FÜR KFZ-MATERIAL

COMPOSITION DE RÉSINE DE POLYPROPYLÈNE POUR MATÉRIAU AUTOMOBILE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **09.11.2007 JP 2007291908**

(43) Date of publication of application:
**21.07.2010 Bulletin 2010/29**

(73) Proprietor: **Prime Polymer Co., Ltd.**
**Tokyo 105-7117 (JP)**

(72) Inventors:
 • **TSUKAHARA, Yoshiaki**
   **Sodegaura-shi**
   **Chiba 299-0265 (JP)**
 • **SAKAI, Ikunori**
   **Sodegaura-shi**
   **Chiba 299-0265 (JP)**

 • **SUGIMOTO, Yoshio**
   **Sodegaura-shi**
   **Chiba 299-0265 (JP)**
 • **TOEI, Satoko**
   **Sodegaura-shi**
   **Chiba 299-0265 (JP)**
 • **FUJIYAMA, Noriaki**
   **Sodegaura-shi**
   **Chiba 299-0265 (JP)**

(74) Representative: **Raynor, Stuart Andrew**
   **J A Kemp**
   **14 South Square**
   **Gray's Inn**
   **London WC1R 5JJ (GB)**

(56) References cited:
   **EP-A2- 0 881 259      WO-A2-2005/030867**
   **JP-A- 2003 041 088      JP-A- 2003 105 163**
   **JP-A- 2004 359 877      JP-A- 2005 232 413**
   **JP-A- 2005 264 017      US-A1- 2004 044 107**

**Description**

**TECHNICAL FIELD**

The present invention relates to specific polypropylene resin compositions for automobile parts. In more detail, the present invention relates to polypropylene resin compositions that can produce injection molded articles having excellent rigidity and impact resistance, less weld lines and flow marks and good appearance and are suitable for producing injection molded automobile parts.

**BACKGROUND ART**

Polypropylene resin compositions have a wide range of uses as rigid and heat resistant materials. For example, they are widely used as materials for automobile parts such as bumpers, instrumental panels (dashboards), door trims and pillars. The use as automobile parts requires excellent general properties such as rigidity, heat resistance and light resistance, and also high impact resistance. To improve impact resistance, an ethylene/propylene random copolymer part is formed during the polymer production process to be a block copolymer, or an ethylene/$\alpha$-olefin copolymer rubber is added after the polymer production. In particular, molded articles used as automobile parts are relatively large and frequently have complicated shapes. In the injection molding of such large and complex articles through a small number of gates, the material is caused to flow a long distance from the gates and defective striped pattern called flow marks are likely to occur near the front end of the flowing material. On the other hand, when the injection molding is performed with a mold having multiple gates, the material injected from each gate will flow a shorter length and therefore the occurrence of flow marks is reduced. However, many weld lines are formed when separate melt fronts meet, and the appearance of the molded articles is damaged.

The weld lines and flow marks are deeply associated with not only the size and shape of the molded articles and the number of gates, but also properties of the polypropylene resin compositions. JP-A-2003-041088 (Patent Document 1) discloses a material designed for large molded articles having excellent appearance with less weld lines or flow marks. However, the document does not explicitly describe the appearance balance between weld lines and flow marks, and does not ensure sufficient appearance balance.

The present inventors studied these problems and have found that specific polypropylene resin compositions can give injection molded articles which have few weld lines and flow marks and achieve high mechanical properties, heat resistance and light resistance enough for use as automobile parts. The present invention has been accomplished based on the finding.

Patent Document 1: JP-A-2003-041088

**DISCLOSURE OF THE INVENTION**

**PROBLEMS TO BE SOLVED BY THE INVENTION**

It is an object of the present invention to provide polypropylene resin compositions capable of giving injection molded articles, in particular injection molded automobile parts, having excellent rigidity and impact resistance and in particular excellent appearance with less weld lines and flow marks.

**MEANS TO SOLVE THE PROBLEMS**

A polypropylene resin composition according to the present invention comprises:

14 to 39 wt% of a propylene block copolymer (A-1) having a melt flow rate (MFR) (230°C, 2.16 kg load) of 50 to 200 g/10 min, the propylene block copolymer comprising 70 to 95 wt% of a room temperature n-decane insoluble part ($D_{insol}$ (1)) composed mainly of a propylene homopolymer part and 5 to 30 wt% of a room temperature n-decane soluble part ($D_{sol}$ (1)) composed mainly of an ethylene/propylene random copolymer part, the $D_{insol}$ (1) having an isotactic pentad fraction (mmmm) of not less than 97% according to $^{13}$C-NMR, the $D_{sol}$ (1) having an intrinsic viscosity [$\eta$] of 4 to 10 dl/g as determined at 135°C in decalin;

20 to 60 wt% of a propylene block copolymer (A-2) having a melt flow rate (MFR) (230°C, 2.16 kg load) of 1 to 200 g/10 min, the propylene block copolymer comprising 70 to 95 wt% of a room temperature n-decane insoluble part ($D_{insol}$ (2)) composed mainly of a propylene homopolymer part and 5 to 30 wt% of a room temperature n-decane soluble part ($D_{sol}$ (2)) composed mainly of an ethylene/propylene random copolymer part, the $D_{insol}$ (2)

having an isotactic pentad fraction (mmmm) of not less than 97% according to $^{13}$C-NMR, the $D_{sol}$ (2) having an intrinsic viscosity [η] of 1.5 to 3 dl/g as determined at 135°C in decalin;
5 to 30 wt% of an ethylene/α-olefin copolymer rubber (B) ; and
10 to 30 wt% of an inorganic filler (C)
(wherein the total of (A-1), (A-2), (B) and (C) is 100 wt%).

According to another embodiment of the present invention, the polypropylene resin composition further comprises:

0.1 to 20 wt% of a propylene homopolymer (A-3) having an isotactic pentad fraction (mmmm) of not less than 97% according to $^{13}$C-NMR and a melt flow rate (MFR) (230°C, 2.16 kg load) of 5 to 500 g/10 min (wherein the total of (A-1), (A-2), (A-3), (B) and (C) is 100 wt%).

Preferably, when the polypropylene resin composition is injection molded to a plate 350 mm in length, 100 mm in width and 3 mm in thickness using an injection mold that has a gate at a central position in the width direction and a weir that blocks the flow of the composition and has a center located 50 mm below the gate in the flowing direction, the weir having a diameter of 40 mm and a thickness of 3 mm, the molded plate satisfies the relation of Equation (III)

$$500 \leq \alpha \times \beta \leq 2000 \quad \cdots \quad (III)$$

wherein α is a weld disappearance rate obtained by Equation (I) from a weld length (a) of a weld line that occurs past the weir, and β is a flow mark development rate obtained by Equation (II) from a flow mark-free length (b) measured from an end on the gate side to a starting point of a flow mark:

$$\alpha = 100 - (a/280 \times 100) \quad \cdots \quad (I)$$

$$\beta = 100 - (b/350 \times 100) \quad \cdots \quad (II).$$

An injection molded article according to the present invention is obtained by injection molding the polypropylene resin composition and is suitably used as an automobile part. In one embodiment, the injection molded article is an automobile part.

**EFFECT OF THE INVENTION**

The polypropylene resin compositions of the present invention can give injection molded articles having excellent mechanical properties and good appearance with less weld lines and flow marks.

**BRIEF DESCRIPTION OF THE DRAWING**

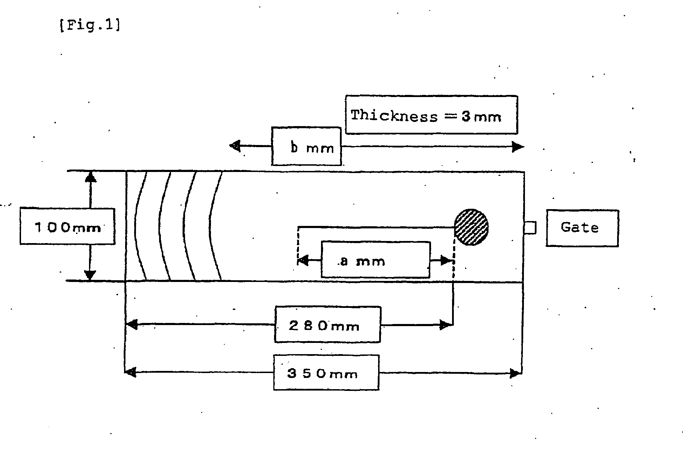

Fig. 1 is a schematic view that explains how a weld length and a flow mark-free length are measured.

**BEST MODE FOR CARRYING OUT THE INVENTION**

The components for the polypropylene resin compositions according to the present invention will be described hereinbelow.

(A-1) Propylene block copolymers

The propylene block copolymer (A-1) according to the present invention comprises a propylene homopolymer part and an ethylene/propylene random copolymer part and has a melt flow rate (MFR) (230°C, 2.16 kg load) of 50 to 200 g/10 min, preferably 50 to 150 g/10 min, more preferably 50 to 140 g/10 min, and still more preferably 70 to 120 g/10 min.
The propylene block copolymer (A-1) according to the present invention is fractionated into a room temperature n-decane insoluble part ($D_{insol}$ (1)) composed mainly of the propylene homopolymer part and a room temperature n-

decane soluble part ($D_{sol}$ (1)) composed mainly of the ethylene/propylene random copolymer part. The content of the $D_{insol}$ (1) is 70 to 95 wt%, preferably 75 to 95 wt%, and more preferably 82 to 92 wt%. The content of the $D_{sol}$ (1) is 5 to 30 wt%, preferably 5 to 25 wt%, and more preferably 8 to 18 wt%.

The $D_{insol}$ (1) has an isotactic pentad fraction (mmmm) of not less than 97% according to $^{13}$C-NMR.

The isotactic pentad fraction (mmmm) represents a proportion of isotactic pentad sequences relative to the pentad sequences in a propylene homopolymer molecular chain measured by $^{13}$C-NMR. In more detail, the isotactic pentad fraction is a ratio of the $^{13}$C-NMR spectrum absorption intensity of the methyl groups in the central propylene monomer unit of five consecutively meso-linked propylene monomer units, relative to the total absorption intensity of the methyl carbon region.

The $D_{insol}$ (1) preferably has a melt flow rate (MFR) (230°C, 2.16 kg load) of 2 to 1000 g/10 min, more preferably 20 to 400 g/10 min, still more preferably 50 to 300 g/10 min, and particularly preferably 80 to 250 g/10 min.

The $D_{sol}$ (1) has an intrinsic viscosity [η] of 4 to 10 dl/g, and preferably 5 to 9 dl/g as determined at 135°C in decalin.

The $D_{sol}$ (1) has a content of ethylene-derived structural units of 20 to 60 mol%, and preferably 30 to 50 mol% according to $^{13}$C-NMR.

The $D_{sol}$ (1) may contain structural units derived from known olefins such as butene and hexene, dienes such as 1,7-octadiene, and vinyl compounds such as styrene while still achieving the object of the present invention. Of these, butene-derived structural units are preferable. The content of these optional structural units derived from the compounds such as olefins is 0 to 5 mol%, and preferably 0 to 2 mol%. The $D_{insol}$ (1) may contain structural units derived from ethylene or the above compounds. The content of these structural units is preferably 0 to 2 mol%, and more preferably 0 to 1 mol%.

If the block copolymer has a melt flow rate or an intrinsic viscosity below the above range, the obtainable resin compositions tend to give molded articles having flow marks and weld lines.

### (A-2) Propylene block copolymers

The propylene block copolymer (A-2) according to the present invention comprises a propylene homopolymer part and an ethylene/propylene random copolymer part and has a melt flow rate (MFR) (230°C, 2.16 kg load) of 1 to 200 g/10 min, preferably 20 to 140 g/10 min, and more preferably 30 to 140 g/10 min.

The propylene block copolymer (A-2) according to the present invention is fractionated into a room temperature n-decane insoluble part ($D_{insol}$ (2)) composed mainly of the propylene homopolymer part and a room temperature n-decane soluble part ($D_{sol}$ (2)) composed mainly of the ethylene/propylene random copolymer part. The content of the $D_{insol}$ (2) is 70 to 95 wt%, and preferably 75 to 90 wt%. The content of the $D_{sol}$ (2) is 5 to 30 wt%, and preferably 10 to 25 wt%.

The $D_{insol}$ (2) preferably has a melt flow rate (MFR) (230°C, 2.16 kg load) of 1 to 600 g/10 min, more preferably 10 to 300 g/10 min, still more preferably 20 to 130 g/10 min, and particularly preferably 30 to 100 g/10 min.

The $D_{insol}$ (2) has an isotactic pentad fraction (mmmm) of not less than 97% according to $^{13}$C-NMR

The $D_{sol}$ (2) has an intrinsic viscosity [η] of 1.5 to 3.5 dl/g, and preferably 2 to 3.5 dl/g as determined at 135°C in decalin.

The $D_{sol}$ (2) has an ethylene content of 20 to 60 mol%, and preferably 30 to 50 mol% according to $^{13}$C-NMR.

The $D_{sol}$ (2) of the present invention may contain structural units derived from known olefins such as butene and hexene, dienes such as 1,7-octadiene, and vinyl compounds such as styrene while still achieving the object of the present invention. Of these, butene-derived structural units are preferable. The content of these optional structural units derived from the compounds such as olefins is 0 to 5 mol%, and preferably 0 to 2 mol%. The $D_{insol}$ (2) may contain structural units derived from ethylene or the above compounds. The content of these structural units is preferably 0 to 2 mol%, and more preferably 0 to 1 mol%.

If the block copolymer has MFR or an intrinsic viscosity below the above range, the obtainable resin compositions tend to give molded articles having flow marks and weld lines.

### (A-3) Propylene homopolymers

The propylene homopolymer (A-3) according to the present invention has an isotactic pentad fraction (mmmm) of not less than 97% according to $^{13}$C-NMR and a melt flow rate (MFR) (230°C, 2.16 kg load) of 5 to 500 g/10 min, preferably 15 to 300 g/10 min, and more preferably 30 to 200 g/10 min.

### Production of components (A-1) to (A-3)

Each of the components (A-1) to (A-3) according to the present invention may be produced using a known titanium catalyst. Preferred examples of the titanium catalysts include solid polymerization catalysts wherein main components are a solid titanium catalyst component containing titanium, magnesium and halogen, and an aluminum compound. The propylene block copolymers (A-1) and (A-2) of the present invention may be produced by multistage polymerization in the presence of a highly stereospecific polypropylene production catalyst according to a method described in Japanese Patent Application No. H11-107975 or JP-A-2004-262993. In detail, the propylene block copolymer may be produced by multistage polymerization that has two or more stages including: a first stage wherein propylene is polymerized in the substantial presence or absence of hydrogen to afford a propylene homopolymer part in an amount that will account for 75 to 95 wt% of the final propylene block copolymer; and a later stage wherein ethylene and propylene are copolymerized to give an ethylene/propylene random copolymer part in an amount that will account for 5 to 25 wt% of the final propylene block copolymer, these stages being performed in the presence of a highly stereospecific polypropylene production catalyst that includes (i) a solid titanium catalyst component containing magnesium, titanium, a halogen and an electron donor, (ii) an organometallic compound catalyst component, and (iii) a donor component. MFR and intrinsic viscosity [$\eta$] of the propylene block copolymers (A-1) and (A-2) may be controlled appropriately by for example changing polymerization conditions and are not particularly limited. Hydrogen is preferably used as a molecular weight modifier.

The multistage polymerization may be carried out continuously, batchwise, or semi-continuously, and is preferably carried out continuously. The polymerization may be performed by known methods including gas-phase polymerization and liquid-phase polymerization such as solution polymerization, slurry polymerization or bulk polymerization. Polymerization in the second and later stages is preferably carried out continuously from the previous stage. In the case of batch polymerization, the multistage polymerization may be performed in one polymerization reactor.

Inert hydrocarbons may be used as polymerization media, or liquid propylene may be used as a polymerization medium. Polymerization conditions in each stage are appropriately selected while the polymerization temperature is about -50 to +200°C, preferably about 20 to 100°C, and the polymerization pressure is atmospheric pressure to 9.8 MPa (gauge pressure), preferably about 0.2 to 4.9 MPa (gauge pressure).

The propylene homopolymer (A-3) of the present invention may be produced by single-stage or multistage, i.e., two or more stages, polymerization of propylene alone according to the method for producing the copolymers (A-1) and (A-2).

(B) Ethylene/$\alpha$-olefin copolymer rubbers

Examples of the ethylene/$\alpha$-olefin copolymer rubbers (B) according to the present invention include ethylene/$\alpha$-olefin copolymers and ethylene/$\alpha$-olefin/non-conjugated diene copolymers.

The $\alpha$-olefins include $\alpha$-olefins having 3 to 10 carbon atoms, with propylene, 1-butene, 1-hexene and 1-octene being concretely preferred. The non-conjugated dienes include cyclic non-conjugated dienes such as 5-ethylidene-2-norbornene, 5-propylidene-2-norbornene, dicyclopentadiene, 5-vinyl-2-norbornene, 5-methylene-2-norbornene, 5-isopropylidene-2-norbornene and norbornadiene; and linear non-conjugated dienes such as 1,4-hexadiene, 4-methyl-1,4-hexadiene, 5-methyl-1,4-hexadiene, 5-methyl-1,5-heptadiene, 6-methyl-1,5-heptadiene, 6-methyl-1,7-octadiene and 7-methyl-1,6-octadiene.

Of the ethylene/$\alpha$-olefin copolymer rubbers (B), ethylene/propylene copolymer and ethylene/butene copolymer are preferable. The content of propylene or butene in the copolymer is in the range of 5 to 80 wt%, preferably 10 to 60 wt%, and more preferably 15 to 50 wt%.

The ethylene/$\alpha$-olefin copolymer rubbers (B) may be produced by known methods or may be commercially obtained. Commercially available products include TAFMER A series and H series manufactured by Mitsui Chemicals, Inc., ENGAGE series manufactured by The Dow Chemical Company, and EXACT series manufactured by Exxon.

(C) Inorganic fillers

The inorganic fillers include talc, clay, calcium carbonate, mica, silicates, carbonates and glass fibers, with talc being preferred. Preferable talc has an average particle diameter of 1 to 10 $\mu$m, and preferably 2 to 6 $\mu$m as measured by laser analysis.

Polypropylene resin compositions

The polypropylene resin compositions of the present invention comprise the components (A-1), (A-2), (B) and (C), and optionally the component (A-3) as required. The components constituting the polypropylene resin composition are selected from materials that satisfy the above-described composition and properties. Two or more kinds of the identical components may be used in combination. For example, two or more propylene block copolymers (A-1) satisfying the aforementioned conditions may be used in combination.

The proportions of each components in the polypropylene resin composition relative to 100 wt% of the components (A-1), (A-2), (B) and (C) are: 14 to 39 wt%, preferably 20 to 35 wt% for the propylene block copolymer (A-1);

20 to 60 wt%, preferably 30 to 50 wt% for the propylene block copolymer (A-2) ; 5 to 30 wt%, preferably 10 to 20 wt for the ethylene/α-olefin copolymer rubber (B); and 10 to 30 wt%, preferably 15 to 25 wt% for the inorganic filler (C).

When the polypropylene resin composition further comprises the propylene homopolymer (A-3), the contents of the components (A-1), (A-2), (B) and (C) are as described above and the content of the propylene homopolymer (A-3) is 0.1 to 20 wt%, and preferably 0.1 to 10 wt%, relative to 100 wt% of (A-1), (A-2), (A-3), (B) and (C).

In the polypropylene resin composition of the present invention, the resin part except the inorganic filler (C) has a melt flow rate (MFR) (230°C, 2.16 kg load) of 1 to 200 g/10 min, preferably 20 to 140 g/10 min, and more preferably 40 to 130 g/10 min.

To determine MFR of the resin part of the polypropylene resin composition of the present invention, the inorganic filler (C) may be separated from the polypropylene resin composition as follows. The polypropylene resin composition containing the inorganic filler (C) is wrapped in filter paper and placed in cylindrical filter paper. The composition is then subjected to Soxhlet extraction with a paraxylene solvent for 6 hours to remove the component (C) that is insoluble in the paraxylene solvent. The resultant resin solution is separated to give the resin part by removing the paraxylene solvent.

When evaluated by a method specified below, the polypropylene resin composition of the present invention satisfies the following relation (III):

$$500 \leq \alpha \times \beta \leq 2000 \quad \cdots \quad (III)$$

wherein α is a weld disappearance rate obtained by Equation (I) from a weld length (a), and β is a flow mark development rate obtained by Equation (II) from a flow mark-free length (b) :

$$\alpha = 100 - (a/280 \times 100) \quad \cdots \quad (I)$$

$$\beta = 100 - (b/350 \times 100) \quad \cdots \quad (II).$$

<Evaluation of weld lines and flow marks>

The polypropylene resin composition is injection molded to a plate 350 mm in length, 100 mm in width and 3 mm in thickness using an injection mold (Fig. 1) that has a gate at a central position in the width direction (50 mm) and a weir that blocks the flow of the composition and has a center located 50 mm below the gate in the flowing direction, the weir having a diameter of 40 mm and a thickness of 3 mm. The molded plate is visually inspected, and a weld length (a) of a weld line that occurs past the weir and a flow mark-free length (b) from an end on the gate side to a starting point of a flow mark are measured.

Injection molding is performed with injection molding machine M200 (MEIKI CO., LTD.) under the following conditions.

Cylinder temperature: 210°C
Mold clamping force: 200 ton
Mold temperature: 20°C
Injection pressure: 8.2 MPa
Cooling time: 20 sec

The larger the weld disappearance rate (α), the better the appearance properties. The smaller the flow mark development rate (β), the better the appearance properties. It is preferable that these values satisfy Equation (III), in which case the molded articles will have an excellent appearance with less weld lines and flow marks.

In conventional polypropylene resin compositions, a high weld disappearance rate (α) accompanies a high flow mark development rate (β), and a low weld disappearance rate (α) accompanies a low flow mark development rate (β). That is, compositions resistant to weld lines tend to cause flow marks, and compositions with less flow marks tend to have weld lines.

In contrast, the polypropylene resin compositions having the aforementioned components in the specified amounts of the present invention satisfy the α x β condition and thereby can give molded articles having excellent balance between weld lines and flow marks.

The aforementioned α and β values may be controlled by adjusting the properties and amounts of each components constituting the polypropylene resin composition. In these factors, the most influential factor is the intrinsic viscosity [η] of the room temperature n-decane soluble parts (D$_{sol}$) composed essentially of an ethylene/propylene random copolymer part of the propylene block copolymers (A-1) and (A-2). That is, both α and β tend to be large when

$[\eta]$ of the room temperature n-decane soluble parts ($D_{sol}$) composed essentially of an ethylene/propylene random copolymer part of the propylene block copolymers is small. In contrast, $\alpha$ and $\beta$ tend to be small if the room temperature n-decane soluble parts ($D_{sol}$) composed essentially of an ethylene/propylene random copolymer part of the propylene block copolymers have large $[\eta]$.

In the present invention, the hitherto impossible improvement in balance between weld lines and flow marks is achieved by using the above specific ratio of the propylene block copolymer (A-1) that contains a room temperature n-decane soluble part ($D_{sol}$ (1)) with large $[\eta]$ to the propylene block copolymer (A-2) that contains a room temperature n-decane soluble part ($D_{sol}$ (2)) with small $[\eta]$.

In addition to the appearance properties, well-balanced mechanical strength properties may be provided by using the ethylene/$\alpha$-olefin copolymer rubber (B) and the inorganic filler (C) in the aforementioned amounts.

The polypropylene resin compositions of the present invention may be produced by mixing or melt kneading the components (A-1), (A-2), (B) and (C) and optionally the component (A-3) by means of a mixing apparatus such as a Banbury mixer, a single-screw extruder, a twin-screw extruder or a high-speed twin-screw extruder. Additives may be added together with the components (A-1) to (A-3), (B) and (C) as required while still achieving the object of the present invention. Exemplary additives include heat stabilizers, antistatic agents, weathering stabilizers, light stabilizers, anti-aging agents, antioxidants, fatty acid metal salts, softeners, dispersing agents, fillers, coloring agents, lubricants and dyes. The mixing sequence for the additives and the like may be determined appropriately. They may be mixed at once, or in multistage such that some of the components are mixed and others are thereafter mixed.

Injection molded articles

The injection molded article according to the present invention is obtained by injection molding the polypropylene resin composition. The injection molded articles may be obtained in various shapes using known injection molding machines and molding conditions. In the injection molding, the resin temperature is generally 200 to 250°C, and the injection pressure that depends on the shape of the injection molded articles is generally 800 to 1400 kg/cm$^2$.

The polypropylene resin compositions of the present invention show excellent molding properties such as flowability in injection molding and can give injection molded articles having good appearance with less noticeable flow marks and weld lines. The injection molded articles of the present invention are particularly suited as automobile parts such as bumpers, instrumental panels (dashboards), side decks, console boxes, side moldings, door trims, pillar trims and steering column covers.

**EXAMPLES**

The present invention will be described by presenting Examples hereinbelow without limiting the scope of the invention.

Molding and properties measurements of the present invention were carried out by the following methods.

Properties measuring methods

(1) Melt flow rate (MFR)

MFR was measured in accordance with ASTM D 1238 (230°C, 2.16 kg load).

(2) Intrinsic viscosity $[\eta]$

The intrinsic viscosity was measured at 135°C in decalin. In detail, approximately 20 mg of a sample was dissolved in 15 ml of decalin, and the specific viscosity $\eta$sp was measured in an oil bath at 135°C. The decalin solution was diluted with 5 ml of decalin, and the specific viscosity $\eta$sp was measured in the same manner. This diluting operation was repeated two more times. The concentration (C) was extrapolated to zero concentration, and the value of $\eta$sp/C was obtained as the intrinsic viscosity.

$$[\eta] = \lim (\eta sp/C) \ (C \rightarrow 0)$$

(3) Content of room temperature n-decane soluble part ($D_{sol}$)

A sample weighing 5 g was mixed with 200 ml of n-decane and was dissolved by heating at 145°C for 30 minutes. The solution was cooled to 20°C in about 3 hours and was allowed to stand for 30 minutes. The resultant precipitate (hereinafter, the n-decane insoluble part ($D_{insol}$)) was filtered. The filtrate was added to an approximately 3-fold excess of acetone to precipitate the components that had been dissolved in n-decane (precipitate (A)). The precipitate (A) was filtered from acetone and was dried. Concentrating the filtrate to dryness did not give any residues.

The content of n-decane soluble part was determined from the following equation.

$$\text{Content of n-decane soluble part (wt\%)} = [\text{Precipitate (A) weight/Sample weight}] \times 100$$

(4) Ethylene content

To determine the concentration of ethylene-derived skeletons in $D_{sol}$ (ethylene content), 20 to 30 mg of a sample was dissolved in 0.6 ml of 1,2,4-trichlorobenzene/deuterated benzene (2:1) solution and was analyzed by carbon nuclear magnetic resonance analysis ($^{13}$C-NMR). Propylene and ethylene were quantitatively measured by determining methylene carbon contents. That is to say, they were determined from Equations (Eq-1) and (Eq-2) below using the following equation:

$$PP = S_{\alpha\alpha}, \quad EP = S_{\alpha\gamma} + S_{\alpha\beta}, \quad EE = 1/2(S_{\beta\delta} + S_{\delta\delta}) + 1/4 S_{\gamma\delta}$$

$$\text{Propylene (mol\%)} = (PP + 1/2EP) \times 100/[(PP + 1/2EP) + (1/2EP + EE)] \quad \cdots \quad (Eq-1)$$

$$\text{Ethylene (mol\%)} = (1/2EP + EE) \times 100/[(PP + 1/2EP) + (1/2EP + EE)] \quad \cdots \quad (Eq-2)$$

(5) Isotactic pentad fraction (mmmm)

The isotactic pentad fraction (mmmm) represents a proportion of isotactic pentad sequences relative to the pentad sequences in a propylene homopolymer molecular chain measured by $^{13}$C-NMR. Concretely, 20 to 30 mg of a sample was dissolved in 0.6 ml of 1,2,4-trichlorobenzene/deuterated benzene (2:1) solution and was analyzed by $^{13}$C-NMR. The isotactic pentad fraction was calculated according to Equation (Eq-3) below:

$$\text{Isotactic pentad fraction (mmmm)} = Pmmmm/Pw \quad \cdots \quad (Eq-3)$$

In Equation (Eq-3), Pmmmm is an absorption intensity of the methyl groups in the third unit of five consecutively meso-linked propylene monomer units, and Pw is an absorption intensity assigned to all the methyl groups in propylene units. The peak assignment was carried out in accordance with Polymer, 1993, Vol. 34, No. 14, 3129-3131.

NMR analysis in (4) and (5) was performed with nuclear magnetic resonance spectrometer ECA 500 (manufactured by JEOL Ltd.) and Fourier transform at a measurement temperature of 120°C, with 45° pulse application, 5.5 sec interval and 5000 to 10000 scans.

(6) Flexural modulus (FM)

The flexural modulus was determined in accordance with ASTM D 790.

(7) Tensile yield strength (TS)

The tensile yield strength was determined in accordance with ASTM D 638.

(8) Izod impact strength (IZ) (23°C)

The Izod impact strength was determined in accordance with ASTM D 256. A test piece was collected from the injection molded article and was notched.

(9) Weld line and flow mark-free length

Weld lines and flow mark-free length were measured and evaluated by the aforementioned method.

Amounts and properties of each component

The following components were used to prepare polypropylene resin compositions in Examples.
Propylene block copolymers (1) to (4) and propylene homopolymers (5) and (6) were prepared by methods described in Japanese Patent Application No.H11-107975 and JP-A-2004-262993.

(1) Propylene block copolymer (A-1-1)

$D_{insol}$ (1) content (propylene homopolymer part): 91 wt%
$D_{sol}$ (1) content (propylene/ethylene random copolymer part) : 9 wt%
Isotactic pentad fraction (mmmm) of $D_{insol}$ (1) : 98.0
Intrinsic viscosity [η] of $D_{sol}$ (1) : 8 dl/g
Ethylene content in $D_{sol}$ (1) : 38 mol%
MFR of block copolymer: 95 g/10 min

(2) Propylene block copolymer (A-1-2)

$D_{insol}$ (1) content (propylene homopolymer part): 90 wt%
$D_{sol}$ (1) content (propylene/ethylene random copolymer part) : 10 wt%
Isotactic pentad fraction (mmmm) of $D_{insol}$ (1) : 97.6
Intrinsic viscosity [η] of $D_{sol}$ (1) : 5.5 dl/g
Ethylene content in $D_{sol}$ (1) : 40 mol%
MFR of block copolymer: 55 g/10 min

(3) Propylene block copolymer (A-2-1)

$D_{insol}$ (2) content (propylene homopolymer part): 93 wt%
$D_{sol}$ (2) content (propylene/ethylene random copolymer part) : 7 wt%
Isotactic pentad fraction (mmmm) of $D_{insol}$ (2): 97.5
Intrinsic viscosity [η] of $D_{sol}$ (2): 3.5 dl/g
Ethylene content in $D_{sol}$ (2): 35 mol%
MFR of block copolymer: 135 g/10 min

(4) Propylene block copolymer (A-2-2)

$D_{insol}$ (2) content (propylene homopolymer part): 77 wt%
$D_{sol}$ (2) content (propylene/ethylene random copolymer part) : 23 wt%
Isotactic pentad fraction (mmmm) of $D_{insol}$ (2) : 97.9
Intrinsic viscosity [η] of $D_{sol}$ (2): 2.5 dl/g
Ethylene content in $D_{sol}$ (2) : 40 mol%
MFR of block copolymer: 30 g/10 min

(5) Propylene homopolymer (A-3-1)

Isotactic pentad fraction (mmmm): 97.4
MFR: 30 g/10 min

(6) Propylene homopolymer (A-3-2)

Isotactic pentad fraction (mmmm): 97.6
MFR: 200 g/10 min

(7) Ethylene/1-octene copolymer elastomer (B-1)

EG8842 manufactured by The Dow Chemical Company
MFR: 2 g/10 min (190°C, 2.16 kg load)
1-octene content: 18 mol%
Density: 0.857 g/cm$^3$

(8) Ethylene/1-octene copolymer elastomer (B-2)

EG8100 manufactured by The Dow Chemical Company
MFR: 2 g/10 min (190°C, 2.16 kg load)
1-octene content: 15 mol%
Density: 0.870 g/cm$^3$

(9) Ethylene/1-butene copolymer elastomer (B-3)

A-0550S manufactured by Mitsui Chemicals, Inc.
MFR: 0.5 g/10 min (190°C, 2.16 kg load)
1-butene content: 20 mol%
Density: 0.860 g/cm$^3$

(10) Fine powdery talc (C)

TP-A25 manufactured by FUJI TALC INDUSTRIAL CO., LTD.
Average particle diameter: 3.5 $\mu$m

[Examples 1 to 4 and Comparative Examples 1 to 4]

The components (A-1) to (C) in amounts shown in Table 1 were dry blended with a Henschel mixer and melt kneaded with a twin-screw kneader at 200°C. The kneaded product was pelletized. The pellets of the composition were molded into predetermined test pieces and plates.

General mechanical properties were evaluated with test pieces prepared by conventional molding. The test pieces proved satisfactory mechanical properties for use as automobile parts. With respect to the injection molded articles, the weld disappearance rate ($\alpha$) and the flow mark development rate ($\beta$) were calculated, and a value $\alpha$ x P was obtained. The polypropylene resin compositions of Examples 1 to 4 satisfied $500 \leq \alpha$ x $\beta \leq 2000$ and provided markedly improved appearance properties.

In contrast, Comparative Examples 1 to 4 in which the compositions were outside the scope of the present invention resulted in resin compositions that had a high weld disappearance rate (α) but a high flow mark development rate (β), or a low weld disappearance rate (α) but a low flow mark development rate (β). Consequently, the α x β values were outside the above range and the balance of appearance properties was bad.

Table 1

| | | Ex. 1 | Ex. 2 | Ex. 3 | Ex. 4 | Comp. Ex. 1 | Comp. Ex. 2 | Comp. Ex. 3 | Comp. Ex. 4 |
|---|---|---|---|---|---|---|---|---|---|
| A-1-1 | Parts by weight | 20 | 35 | 20 | 20 | | 10 | 40 | 38 |
| A-1-2 | Parts by weight | | | 15 | | | | | |
| A-2-1 | Parts by weight | 15 | | | | 30 | 25 | | |
| A-2-2 | Parts by weight | 28 | 28 | 29 | 33.5 | 35 | 29 | 22.5 | |
| A-3-1 | Parts by weight | | | | 10 | | | | |
| A-3-2 | Parts by weight | | | | | | | | 18 |
| B-1 | Parts by weight | 8 | 8 | | | 7 | 7.5 | 8.25 | |
| B-2 | Parts by weight | 8 | 8 | 5 | 7.5 | 7 | 7.5 | 8.25 | 12 |
| B-3 | Parts by weight | | | 10 | 7.5 | | | | 12 |
| C | Parts by weight | 21 | 21 | 21 | 21.5 | 21 | 21 | 21 | 20 |
| Total | Parts by weight | 100 | 100 | 100 | 100 | 100 | 100 | 100 | 100 |
| MFR | | 34 | 32 | 31 | 30 | 33 | 34 | 32 | 34 |
| FM | | 1950 | 2020 | 2090 | 2040 | 1880 | 1950 | 2080 | 2100 |
| TS | | 26 | 26 | 26 | 26 | 25 | 26 | 26 | 27 |
| IZ | | 480 | 480 | 460 | 450 | 500 | 460 | 470 | 480 |
| Weld disappearance rate (α) | | 38 | 21 | 36 | 30 | 54 | 46 | 7 | 3 |
| Flow mark development rate (β) | | 44 | 27 | 31 | 29 | 69 | 54 | 17 | 12 |
| α x β | | 1661 | 580 | 1121 | 870 | 3677 | 2520 | 121 | 36 |

## Claims

1. A polypropylene resin composition comprising:

   14 to 39 wt% of a propylene block copolymer (A-1) having a melt flow rate (MFR) (230°C, 2.16 kg load) of 50 to 200 g/10 min, the propylene block copolymer comprising 70 to 95 wt% of a room temperature n-decane insoluble part ($D_{insol}$ (1)) composed mainly of a propylene homopolymer part and 5 to 30 wt% of a room temperature n-decane soluble part ($D_{sol}$ (1)) composed mainly of an ethylene/propylene random copolymer part,

the $D_{insol}$ (1) having an isotactic pentad fraction (mmmm) of not less than 97% according to $^{13}$C-NMR, the $D_{sol}$ (1) having an intrinsic viscosity [η] of 4 to 10 dl/g as determined at 135°C in decalin;

20 to 60 wt% of a propylene block copolymer (A-2) having a melt flow rate (MFR) (230°C, 2.16 kg load) of 1 to 200 g/10 min, the propylene block copolymer comprising 70 to 95 wt% of a room temperature n-decane insoluble part ($D_{insol}$ (2)) composed mainly of a propylene homopolymer part and 5 to 30 wt% of a room temperature n-decane soluble part ($D_{sol}$ (2)) composed mainly of an ethylene/propylene random copolymer part, the $D_{insol}$ (2) having an isotactic pentad fraction (mmmm) of not less than 97% according to $^{13}$C-NMR, the $D_{sol}$ (2) having an intrinsic viscosity [η] of 1.5 to 3.5 dl/g as determined at 135°C in decalin;

5 to 30 wt% of an ethylene/α-olefin copolymer rubber (B) ; and

10 to 30 wt% of an inorganic filler (C)

(wherein the total of (A-1), (A-2), (B) and (C) is 100 wt%).

2. The polypropylene resin composition according to claim 1, which further comprises:

0.1 to 20 wt% of a propylene homopolymer (A-3) having an isotactic pentad fraction (mmmm) of not less than 97% according to $^{13}$C-NMR and a melt flow rate (MFR) (230°C, 2.16 kg load) of 5 to 500 g/10 min (wherein the total of (A-1), (A-2), (A-3), (B) and (C) is 100 wt%).

3. The polypropylene resin composition according to claim 1 or 2, wherein the room temperature n-decane insoluble part ($D_{insol}$ (1)) composed mainly of a propylene homopolymer part of the propylene block copolymer (A-1) has a melt flow rate (MFR) (230°C, 2.16 kg load) of 2 to 1000 g/10 min.

4. The polypropylene resin composition according to any one of claims 1 to 3, wherein when the polypropylene resin composition is injection molded to a plate 350 mm in length, 100 mm in width and 3 mm in thickness using an injection mold that has a gate at a central position in the width direction and a weir that blocks the flow of the composition and has a center located 50 mm below the gate in the flowing direction, the weir having a diameter of 40 mm and a thickness of 3 mm, the molded plate satisfies the relation of Equation (III):

$$500 \leq \alpha \times \beta \leq 2000 \cdots (III)$$

wherein α is a weld disappearance rate obtained by Equation (I) from a weld length (a) of a weld line that occurs past the weir, and β is a flow mark development rate obtained by Equation (II) from a flow mark-free length (b) measured from an end on the gate side to a starting point of a flow mark:

$$\alpha = 100 - (a/280 \times 100) \cdots (I)$$

$$\beta = 100 - (b/350 \times 100) \cdots (II).$$

5. An injection molded article obtained by injection molding the polypropylene resin composition of any one of claims 1 to 4.

6. The injection molded article according to claim 5, which is an automobile part.

**Patentansprüche**

1. Polypropylen-Harz-Zusammensetzung umfassend:

14 bis 39 Gew.-% eines Propylen-Block-Copopymers (A-1) mit einer Schmelzflussrate (melt flow rate, MFR) (230°C, 2,16 kg Ladung) von 50 bis 200 g/10 min, wobei das Propylen-Block-Copolymer 70 bis 95 Gew.-% eines bei Raumtemperatur in n-Decan unlöslichen Teils ($D_{insol}$ (1)), der hauptsächlich zusammengesetzt ist aus einem Propylen-Homopolymer-Teil, und 5 bis 30 Gew.-% eines bei Raumtemperatur in n-Decan löslichen

Teils $D_{sol}$ (1)), der hauptsächlich zusammengesetzt ist aus einem statistischen Ethylen/Propylen-Copolymer-Teil, umfasst,

wobei $D_{insol}$ (1) eine isotaktische Pentad-Fraktion (mmmm) von nicht weniger als 97 % gemäß $^{13}$C-NMR aufweist, und $D_{sol}$ (1) eine intrinsische Viskosität [η] von 4 bis 10 dl/g wie bestimmt bei 135°C in Decalin aufweist;

20 bis 60 Gew.-% eines Propylen-Block-Copolymers (A-2) mit einer Schmelzflussrate (MFR) (230°C, 2,16 kg Ladung) von 1 bis 200 g/10 min, wobei das Propylen-Block-Copolymer 70 bis 95 Gew.-% eines bei Raumtemperatur in n-Decan unlöslichen Teils ($D_{insol}$ (2)), der hauptsächlich zusammengesetzt ist aus einem Propylen-Homopolymer-Teil und 5 bis 30 Gew.-% eines bei Raumtemperatur in n-Decan löslichen Teils ($D_{sol}$ (2)) der hauptsächlich zusammengesetzt ist aus einem statistischen Ethylen/Propylen-Copolymer-Teil, umfasst,

wobei $D_{insol}$ (2) eine isotaktische Pentad-Fraktion (mmmm) von nicht weniger als 97 % gemäß $^{13}$C-NMR aufweist, und $D_{sol}$ (2) eine intrinsische Viskosität [η] von 1,5 bis 3,5 dl/g wie bestimmt bei 135°C in Decalin auweist;

5 bis 30 Gew.-% eines Ethylen/α-Olefin-Copolymer-Kautschuks (B); und

10 bis 30 Gew.% eines anorganischen Füllstoffs (C)

(wobei die Summe von (A-1), (A-2), (B) und (C) 100 Gew.-% beträgt).

2. Popypropylen-Harz-Zusammensetzung nach Anspruch 1, des Weiteren umfassend:

0,1 bis 20 Gew.% eines Propylen-Homopolymers (A-3) mit einer isotaktischen Pentad-Fraktion (mmmm) von nicht weniger als 97 % gemäß $^{13}$C-NMR und einer Schmelzflussrate (MFR) (230°C, 2,16 kg Ladung) von 5 bis 500 g/10 min (wobei die Summe von (A-1), (A-2), (A-3), (B) und (C) 100 Gew.-% beträgt.

3. Polypropylen-Harz-Zusammensetzung nach Anspruch 1 oder 2, wobei der bei Raumtemperatur in n-Decan unlösliche Teil ($D_{insol}$ (1)), der hauptsächlich aus einem Propylen-Homopolymer-Teil des Propylen-Block-Copolymers (A-1) zusammengesetzt ist, eine Schmelzflussrat (MFR) (230°C, 2,16 kg Ladung) von 2 bis 1000 g/10 min aufweist.

4. Polypropylen-Harz-Zusammensetzung nach einem beliebigen der Ansprüche 1 bis 3, wobei, wenn die Polypropylen-Harz-Zusammensetzung zu einer Platte von 350 mm Länge, 100 mm Breite und 3 mm Dicke unter Verwendung einer Spritzgussform, die ein Tor (gate) an einer zentralen Position in der Breitenrichtung und ein Wehr (weir), welches den Fluss der Zusammensetzung blockiert und ein 50 mm unterhalb des Tors in Flussrichtung angeordnetes Zentrum aufweist, wobei das Wehr einen Durchmesser von 40 mm und eine Dicke von 3 mm aufweist, spritzgegossen ist, die gegossene Platte die Beziehung gemäß Gleichung (III) erfüllt:

$$500 \leq α \times β \leq 2000 \quad \cdots \quad (III)$$

wobei α eine Naht-Verschwindens-Geschwindigkeit (weld disappearance rate) ist, erhalten durch Gleichung (I) aus einer Nahtlänge (a) einer Nahtlinie, die nach dem Wehr auftritt, und β eine Flussmarken-Entwicklungsgeschwindigkeit (flow mark development rate) ist, erhalten durch Gleichung (II) aus einer Flussmarken-freien-Länge (b) gemessen von einem Ende auf der Torseite zu einem Anfangspunkt auf einer Flussmarke:

$$α = 100 - (a/280 \times 100) \quad \cdots \quad (I)$$

$$β = 100 - (b/350 \times 100) \quad \cdots \quad (II).$$

5. Spritzgussartikel erhalten durch Spritzgießen der Polypropylen-Harz-Zusammensetzung gemäß einem beliebigen der Ansprüche 1 bis 4.

6. Spritzgussartikel nach Anspruch 5, der ein Automobilteil ist.

**Revendications**

1. Composition de résine de polypropylène, comprenant :

- de 14 à 39 % en poids d'un copolymère à blocs de propylène (A-1) qui présente un indice de fluidité à chaud (IFC), à 230 °C sous une charge de 2,16 kg, de 50 à 200 g/10 min, lequel copolymère à blocs de propylène comprend de 70 à 95 % en poids de fraction insoluble dans le n-décane à température ambiante ($D_{insol}(1)$), constituée principalement d'un homopolymère de propylène, et de 5 à 30 % en poids de fraction soluble dans le n-décane à température ambiante ($D_{sol}(1)$), constituée principalement d'un copolymère statistique d'éthylène et de propylène, dans laquelle fraction $D_{insol}(1)$ la proportion de pentades isotactiques (mmmm), mesurée par RMN du $^{13}$C, vaut au moins 97 %, et laquelle fraction $D_{sol}(1)$ présente une viscosité intrinsèque [η], mesurée à 135 °C dans de la décaline, de 4 à 10 dL/g ;

- de 20 à 60 % en poids d'un copolymère à blocs de propylène (A-2) qui présente un indice de fluidité à chaud (IFC), à 230 °C sous une charge de 2,16 kg, de 1 à 200 g/10 min, lequel copolymère à blocs de propylène comprend de 70 à 95 % en poids de fraction insoluble dans le n-décane à température ambiante ($D_{insol}(2)$), constituée principalement d'un homopolymère de propylène, et de 5 à 30 % en poids de fraction soluble dans le n-décane à température ambiante ($D_{sol}(2)$), constituée principalement d'un copolymère statistique d'éthylène et de propylène, dans laquelle fraction $D_{insol}(2)$ la proportion de pentades isotactiques (mmmm), mesurée par RMN du $^{13}$C, vaut au moins 97 %, et laquelle fraction $D_{sol}(2)$ présente une viscosité intrinsèque [η], mesurée à 135 °C dans de la décaline, de 1,5 à 3,5 dL/g ;

- de 5 à 30 % en poids d'un caoutchouc copolymère d'éthylène et d'α-oléfine (B) ;

- et de 10 à 30 % en poids d'une charge inorganique (C) ;

étant entendu que les composants (A-1), (A-2), (B) et (C) font au total 100 % en poids.

2. Composition de résine de polypropylène, conforme à la revendication 1, qui comprend en outre :

- de 0,1 à 20 % en poids d'un homopolymère de propylène (A-3), dans lequel la proportion de pentades isotactiques (mmmm), mesurée par RMN du $^{13}$C, vaut au moins 97 % et qui présente un indice de fluidité à chaud (IFC), à 230 °C sous une charge de 2,16 kg, de 5 à 500 g/10 min ;

étant entendu que les composants (A-1), (A-2), (A-3), (B) et (C) font au total 100 % en poids.

3. Composition de résine de polypropylène, conforme à la revendication 1 ou 2, dans laquelle la fraction insoluble dans le n-décane à température ambiante ($D_{insol}(1)$), constituée principalement d'un homopolymère de propylène, du copolymère à blocs de propylène (A-1) présente un indice de fluidité à chaud (IFC), à 230 °C sous une charge de 2,16 kg, de 2 à 1000 g/10 min.

4. Composition de résine de polypropylène, conforme à l'une des revendications 1 à 3, avec laquelle, lorsque cette composition de résine de polypropylène est moulée par injection en une plaque de 350 mm de long, 100 mm de large et 3 mm d'épaisseur au moyen d'un moule d'injection comportant un orifice d'entrée en position centrale dans la direction de la largeur et un obstacle qui dévie l'écoulement de la composition, qui a 40 mm de diamètre et 3 mm d'épaisseur et dont le centre est situé à 50 mm de distance de l'orifice d'entrée dans la direction de l'écoulement, la pièce moulée obéit à la relation exprimée par l'équation (III) :

$$500 \leq \alpha \times \beta \leq 2000 \qquad (III)$$

dans laquelle α représente la proportion de disparition de ligne de soudure, obtenue, au moyen de l'équation (I), à partir de la longueur (a) de la ligne de soudure qui apparaît derrière l'obstacle, et β est la proportion de développement de marques d'écoulement, obtenue, au moyen de l'équation (II), à partir de la longueur (b) sans marques d'écoulement, mesurée à partir du bout situé du côté de l'orifice d'entrée jusqu'au point où commencent à apparaître des marques d'écoulement :

$$\alpha = 100 - (a/280 \times 100) \qquad (I)$$

$$\beta = 100 - (b/350 \times 100) \qquad (II).$$

5. Pièce moulée par injection, obtenue par moulage par injection d'une composition de résine de polypropylène, conforme à l'une des revendications 1 à 4.

6. Pièce moulée par injection, conforme à la revendication 5, qui est une pièce de véhicule automobile.

[Fig.1]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003041088 A
- JP H11107975 B
- JP 2004262993 A

**Non-patent literature cited in the description**

- *Polymer,* 1993, vol. 34 (14), 3129-3131